# EUROPÄISCHE PATENTSCHRIFT

(11) **EP 1 299 867 B1**
(45) Veröffentlichungstag und Bekanntmachung des Hinweises auf die Patenterteilung: **03.11.2004**
(21) Anmeldenummer: 01951671.5
(22) Anmeldetag: 12.07.2001
(51) Int. Cl.: G07G 1/00, G07G 1/12

(54) **Waage**
Scales
Balance

(30) Priorität: 13.07.2000 DE 10034034
(43) Veröffentlichungstag der Anmeldung: 09.04.2003
(73) Patentinhaber: Mettler-Toledo (Albstadt) GmbH, 72458 Albstadt (DE)
(72) Erfinder: WALLISCH, Gebhard, 72393 Burladingen (DE)
(74) Vertreter: Patentanwälte Leinweber & Zimmermann
(86) Internationale Anmeldenummer: PCT/EP2001/008080
(87) Internationale Veröffentlichungsnummer: WO 2002/007118

(56) Entgegenhaltungen:
- EP-A- 0 152 055
- EP-A- 0 720 134
- WO-A-94/04891
- DE-A- 3 147 274
- PATENT ABSTRACTS OF JAPAN vol. 1999, no. 08, 30. Juni 1999 (1999-06-30) & JP 11 086135 A (TOSHIBA TEC KK), 30. März 1999 (1999-03-30)
- PATENT ABSTRACTS OF JAPAN vol. 017, no. 384 (P-1575), 19. Juli 1993 (1993-07-19) & JP 05 062071 A (MITSUBISHI ELECTRIC CORP), 12. März 1993 (1993-03-12)
- PATENT ABSTRACTS OF JAPAN vol. 1998, no. 13, 30. November 1998 (1998-11-30) & JP 10 222769 A (NITSUKO CORP), 21. August 1998 (1998-08-21)

## Beschreibung

Die Erfindung betrifft eine Waage nach dem Oberbegriff des Anspruchs 1, ein unter Verwendung derartiger Waagen verwirklichtes Verkaufssystem sowie ein Verfahren zur Sichtdarstellung von warenbezogenen Informationsinhalten während eines Verkaufsvorganges.

Waagen der eingangs beschriebenen Art in Form von Ladenwaagen sind beispielsweise aus der WO 94/04891 und der EP 0 152 055 B1 bekannt. Bei den in den genannten Schriften beschriebenen Waagen werden mit Hilfe von Wägezellen das Gewicht der Waren angebende warenbezogene Signale erzeugt und auf Grundlage der Identifikationssignale der Kaufpreis der abgewogenen Waren ermittelt. Dazu werden bei der in der WO 94/04891 beschriebenen Ladenwaage durch Betätigen einer in die Anzeigeeinrichtung integrierten Eingabeeinrichtung die Art der abgewogenen Waren angebende Identifikationssignale erzeugt, auf deren Grundlage wiederum Grundpreise (Preis pro Gewicht) für diese Waren aus einem Speicher abgerufen werden. Der Preis der abgewogenen Ware wird dann durch Multiplikation des auf Grundlage der warenbezogenen Gewichtssignale ermittelten Gewichtes der Ware mit dem unter Benutzung der Identifikationssignale abgerufenen Grundpreis ermittelt und auf der Anzeigeeinrichtung angezeigt. Daneben wird auf der Anzeigeeinrichtung auch noch der Grundpreis der Ware und das Gewicht selbst dargestellt. Zur Erleichterung der Bedienung der bekannten Waage werden auf den den Eingabefeldern der in die Anzeigeeinrichtung integrierten Eingabeeinrichtung entsprechenden Anzeigefeldern die Warenart darstellende Informationsinhalte angezeigt, wie etwa Bilder der Waren oder Warenbezeichnungen. Dadurch wird der Verkaufsvorgang deutlich erleichtert.

Eine weitere Erleichterung des Verkaufsvorgangs wird bei Einsatz mehrerer Waagen der in der WO 94/04891 beschriebenen Art dadurch erreicht, daß diese Geräte entsprechend der EP 0 152 055 B1 zu einem Waagenverbund zusammengeschlossen werden, in dem Verkaufsvorgänge an den einzelnen Waagen darstellende Verkaufsdaten mit einer zentralen Datenverarbeitungseinrichtung erfaßt und ausgewertet werden. Dadurch wird nicht nur der Verkaufsvorgang selbst erleichtert, weil zahlreiche ansonsten durch das Verkaufspersonal abzuwickelnde Arbeiten durch die zentrale Datenverarbeitungseinrichtung erledigt werden können, sondern auch die Gesamtorganisation der Warenbeschaffung erleichtert und eine zentrale Kontrolle der Verkaufsvorgänge an den einzelnen Waagen ermöglicht.

Allerdings hat es sich beim Einsatz der aus der EP 0 152 055 B1 bekannten Verbundsysteme gezeigt, daß es häufig zu Problemen bei der termingerechten Warenbeschaffung und damit zu Versorgungsengpässen für einzelne Warengruppen kommt während für andere Warengruppen eine Überversorgung vorhanden ist, so daß diese Waren nicht rechtzeitig vor Ablauf der Haltbarkeit abverkauft werden können.

Angesichts dieser Probleme im Stand der Technik liegt der Erfindung die Aufgabe zugrunde, eine Waage der eingangs beschriebenen Art bereitzustellen, welche eine weitere Optimierung des Verkaufsablaufs ermöglicht, ein daraus hergestelltes Verkaufssystem anzugeben und ein mit Hilfe derartiger Waagen ausführbares Verfahren zur Sichtdarstellung von warenbezogenen Informationsinhalten während eines Verkaufsvorganges zur Verfügung zu stellen.

Hinsichtlich der Waagen wird diese Aufgabe durch eine Weiterbildung der bekannten Waagen gelöst, die im wesentlichen dadurch gekennzeichnet ist, daß die Waage zum Erzeugen einer Sichtdarstellung von die vorhandene Menge der Waren der von den Identifikationssignalen angegebenen Art darstellenden Mengeninformationen betreibbar ist.

Diese Erfindung beruht auf der Erkenntnis, daß die beim Einsatz der bekannten Verbundsysteme beobachteten Probleme in erster Linie darauf zurückzuführen sind, daß die an der zentralen Datenverarbeitungseinrichtung vorhandenen Daten nur sporadisch zur Kontrolle des Warenbestandes eingesetzt werden, weil die zentrale Datenverarbeitungseinrichtung in der Regel zahlreiche Aufgaben zu erfüllen hat, wie etwa die Aktualisierung des Datenbestandes, die Registrierung von Verkaufsdaten für einzelne Verkaufsposten und/oder -personen, die Umsatzermittlung od.dgl. Durch die erfindungsgemäße Weiterbildung der bekannten Waagen wird dagegen die Kontrolle des Warebestandes durch das Verkaufspersonal selbst bei jedem einzelnen Verkaufsvorgang ermöglicht. Wenn das Verkaufspersonal beim Verkauf einzelner Waren durch Kontrolle der dargestellten Wareninformationen feststellt, daß Waren der gerade verkauften Art nur noch in geringem Umfang vorhanden sind, kann es selbst die Beschaffung neuer Waren dieser Art veranlassen. Dabei kann sich die Mengeninformation auf die an dem Verkaufsposten selbst noch vorhandene Menge entsprechender Waren, auf die in dem Geschäft noch vorhandene Menge entsprechender Waren oder aber auch auf die in einem gesamten Filialnetz noch vorhandene Menge entsprechender Waren beziehen. Für die beiden zuletzt beschriebenen Fälle ist die Waage zweckmäßigerweise mit anderen Waagen zu einem Verbund zusammengeschlossen, wobei ein Austausch der Verkaufsdaten zwischen den einzelnen Waagen des Verbundes erfolgt. Dabei kann die Mengeninformation Zahlenangaben über das noch vorhandene Gewicht umfassen. Daneben ist jedoch auch an die Darstellung von Mengeninformationen in Form von graphischen und/oder farbigen Symbolen gedacht. Dabei kann durch eine erste Farbe angezeigt werden, daß noch genügend Waren vorhanden sind, während durch eine zweite Farbe angezeigt wird, daß ein Warenmangel zu besorgen ist und durch eine dritte Farbe zum Ausdruck gebracht wird, daß entsprechende Waren im Überfluß vorhanden sind, so daß hier verkaufsfördemde Maßnahmen ergriffen werden müssen.

Zweckmäßigerweise erfolgt die Darstellung der Mengeninformation mit der auch für die Sichtdarstellung der auf Grundlage der warenbezogenen Signale ermittelten Informationsinhalte benutzten Anzeigeeinrichtung. Daneben können zur Sichtdarstellung der Mengeninformationen aber auch gesonderte Anzeigeelemente, wie etwa einzelne Leuchtdioden od.dgl. zum Einsatz kommen.

Zweckmäßigerweise ist der erfindungsgemäßen Waage eine Speichereinrichtung zum Speichern von die vorhandenen Warenmengen darstellenden Mengendaten zugeordnet. Dabei kann diese Speichereinrichtung in der Waage selbst angeordnet sein. Diese Ausführungsform ist insbesondere dann zweckmäßig, wenn in dem Geschäft nur wenige Waagen eingesetzt werden und die Bereitstellung eines vernetzten Waagenverbundes aus diesem Grund nicht unbedingt erforderlich ist. Im besonderen beim Einsatz erfindungsgemäßer Waagen in Supermärkten hat es sich jedoch als besonders sinnvoll erwiesen, wenn die die Mengendaten enthaltende Speichereinrichtung in einer zentralen Datenbearbeitungseinrichtung untergebracht ist. Bei dieser Anordnung können die Mengendaten in der zentralen Datenverarbeitungseinrichtung zentral aktualisiert werden, indem eine ansonsten in der Waage selbst vorzunehmende Veränderung der Mengendaten jedesmal dann vorgenommen wird, wenn eine Lieferung oder ein Warenabgang (in andere Filialen) erfolgt. Die Eingabe der Mengendaten an den Waagen selbst ist im besonderen dann sinnvoll, wenn nur bestimmte Artikel bei der Lagerbestandserfassung verfolgt werden sollen.

Sobald ein Verkaufsvorgang vorgenommen wird, werden die durch die Identifikationssignale bestimmten Mengendaten aus der Speichereinrichtung abgerufen und zur Erzeugung der Mengeninformationsdarstellung eingesetzt. Dabei kann dieser Abruf bei Unterbringung der Speichereinrichtung in der Waage selbst ohne Rückgriff auf eine zentrale Datenverarbeitungseinrichtung bzw. ein zentrales Warenwirtschaftssystem erfolgen. Bei Benutzung einer zentralen Datenverarbeitungseinrichtung werden die Identifikationssignale an die zentrale Einrichtung weitergegeben, dort die entsprechenden Mengendaten abgerufen und wieder zurück an die Waage übermittelt, um dort die entsprechende Mengeninformationsdarstellung zu veranlassen. Bei modemen Datenverarbeitungseinrichtungen kann dieser Vorgang sehr schnell erfolgen, so daß das Ergebnis spätestens nach 0,5 Sek. in Form entsprechender Mengeninformationsdarstellungen erscheint. Dadurch wird sichergestellt, daß zu Beginn des nächsten Verkaufsvorganges die Mengeninformationsdarstellung bereits erfolgt ist.

Wie vorstehend bereits erläutert, werden die Mengeninformationsdaten zweckmäßigerweise bei jedem Verkaufsvorgang aktualisiert. Dazu wird beim Einsatz von erfindungsgemäßen Waagen bei jedem Verkaufsvorgang das Gewicht der verkauften Ware von dem zuvor noch vorhandenen Gewicht entsprechender Waren subtrahiert. Dabei erfolgt diese Aktualisierung sinnvollerweise erst dann, wenn der Verkaufsvorgang durch eine Bedienungsperson bestätigt wurde, beispielsweise dann, wenn eine abgewogene Warenmenge von der Bedienungsperson gebucht ist.

In besonders vorteilhafter Ausgestaltung der Erfindung werden nach diesem Bestätigungsvorgang den aktualisierten Mengendaten entsprechende Mengeninformationen dargestellt, so daß das Verkaufspersonal den Einfluß des Verkaufsvorgangs unmittelbar überwachen und ggf. die Beschaffung neuer Waren veranlassen kann.

Zur Erzeugung der Identifikationssignale kann die erfindungsgemäße Waage mit einer entsprechenden Eingabeeinrichtung ausgestattet sein. Diese Eingabeeinrichtung kann beispielsweise einzelne Eingabetasten oder Eingabefelder für jede der zu verkaufenden Waren umfassen. Daneben ist jedoch auch an den Einsatz von Nummernblöcken als Eingabeeinrichtung gedacht, mit denen die Informationssignale durch Eingabe entsprechender PLU-Nummern erzeugt werden. Darüber hinaus ist auch an den Einsatz kombinierter Eingabeeinrichtungen gedacht, mit denen die Informationssignale für einen Teil der Waren durch Eingabe entsprechender PLU-Nummem erzeugt werden und für einen anderen Teil der Waren durch Betätigung entsprechender Eingabefelder bzw. -tasten, wie beispielsweise in der WO 94/04891 beschrieben. Zusätzlich oder alternativ kann die Eingabeeinrichtung auch noch einen Strichcodeleser oder einen Scanner umfassen. Bei Einsatz erfindungsgemäßer Geräte in Form von Waagen ist die Einrichtung zum Erzeugen warenbezogener Signale zum Erzeugen von das Gewicht der Waren darstellenden Signalen ausgelegt.

Wie der vorstehenden Erläuterung erfindungsgemäßer Waagen zu entnehmen ist, besteht ein erfindungsgemäßes Verkaufssystem im wesentlichen aus einer derartigen Waage und einer zentralen Datenverarbeitungseinrichtung zum Erfassen und Verarbeiten von von dieser Waage daran weitergeleiteten Verkaufsdaten, wobei die Speichereinrichtung und/oder die Aktualisierungseinrichtung in der zentralen Datenverarbeitungseinrichtung angeordnet und der Speichereinrichtung eine Eingabeeinrichtung zum Eingeben der Mengeninformation zugeordnet sein kann. Dabei ist im besonderen auch an solche Ausführungsformen gedacht, bei denen die zentrale Datenverarbeitungseinrichtung selbst in Form einer erfindungsgemäßen Waage verwirklicht ist.

Wie der vorstehenden Erläuterung weiter zu entnehmen ist, zeichnet sich ein erfindungsgemäßes Verfahren zur Sichtdarstellung von warenbezogenen Informationsinhalten während eines Verkaufsvorganges, bei dem mit einer Waage auf Grundlage von das Gewicht von Waren darstellende Signale aufweisenden warenbezogenen Signalen und die Art der zu verkaufenden Waren darstellenden Identifikationssignalen erzeugte Informationsinhalte auf einer Anzeigeeinrichtung des Verkaufsgerätes dargestellt werden im wesentlichen dadurch aus, daß mit der Waage eine Sichtdarstellung von die vorhandene Menge der Waren der von den Identifikationssignalen angegebenen Art darstellenden Mengeninformationen erzeugt wird. Dazu können die warenbezogenen Signale und/oder die Identifikationssignale an eine zentrale Datenverarbeitungseinrichtung weitergeleitet werden und den darzustellenden Informationsinhalten entsprechende Daten in der zentralen Datenverarbeitungseinrichtung erzeugt und zur Sichtdarstellung der Informationsinhalte bzw. Mengeninformationen an die Waage übermittelt werden.

Zusammenfassend ist festzustellen, daß die Idee der Erfindung darin besteht, an mindestens einem Verkaufsposten zum Verkauf angebotene Waren zu identifizieren, Daten über den Lagerbestand der identifizierten Waren abzufragen und Angaben über Gewicht bzw. Verkaufspreis der identifizierten Waren zusammen mit Daten über den Lagerbestand an dem Verkaufsposten selbst wiederzugeben, wobei zur Erzeugung der für die Sichtdarstellung der Informationsinhalte benötigten Daten in den erfindungsgemäßen Waagen selbst oder einem separaten Warenbewirtschaftungsmodul bekannter Art verwaltet werden können. Falls die Berechnung und Datenerzeugung in den Waagen selbst erfolgt, ist daran gedacht, daß entsprechende Daten in frei wählbaren Zeitabständen, wie Stunden, Tagen, Wochen von einem zentralen Warenbewirtschaftungsmodul auf erfindungsgemäße Waagen überspielt werden. Die zentrale Datenverarbeitungseinrichtung kann an beliebigen Orten, beispielsweise in einem Hauptlager, Nebenlager oder an einer speziellen Eingabestelle oder auch an einem Verkaufsposten selbst angeordnet sein und dort gewartet und aktualisiert werden.

## Patentansprüche

1. Waage zur Verwendung beim Verkauf von Waren in einem Geschäft mit einer mindestens eine Wägezelle zum Erzeugen von das Gewicht der Waren darstellenden Signalen aufweisenden Einrichtung zum Erzeugen von die das Gewicht darstellenden Signale aufweisenden warenbezogenen Signalen einer Einrichtung zum Erzeugen von die Art der zu verkaufenden Waren darstellenden Identifikationssignalen und einer Anzeigeeinrichtung zum Erzeugen einer Sichtdarstellung von auf Grundlage der warenbezogenen Signale und/oder der Identifikationssignale ermittelten Informationsinhalten, wobei die Waage zum Erzeugen einer Sichtdarstellung von die vorhandene Menge der Waren der von den Identifikationssignalen angegebenen Art darstellenden Mengeninformationen betreibbar ist.

2. Waage nach Anspruch 1, **dadurch gekennzeichnet, daß** die Mengeninformationen mit der Anzeigeeinrichtung angezeigt werden.

3. Waage nach Anspruch 1 oder 2, **dadurch gekennzeichnet, daß** der Waage eine Speichereinrichtung zum Speichern von die vorhandenen Warenmengen darstellenden Mengendaten zugeordnet ist.

4. Waage nach Anspruch 3, **dadurch gekennzeichnet, daß** der Speichereinrichtung eine Aktualisierungseinrichtung zum Aktualisieren der Mengendaten während und/oder nach dem Verkaufsvorgang zugeordnet ist.

5. Waage nach einem der vorhergehenden Ansprüche, **gekennzeichnet durch** eine Einrichtung zum Angeben von die Art der Waren angebenden Daten, auf deren Grundlage die Identifikationssignale erzeugt werden.

6. Waage nach einem der vorhergehenden Ansprüche, **dadurch gekennzeichnet, daß** die Einrichtung zum Erzeugen warenbezogener Signale zum Erzeugen von den Kaufpreis der Waren darstellenden Signalen ausgelegt ist.

7. Verkaufssystem mit einer. Waage nach einem der vorhergehenden Ansprüche und einer zentralen Datenverarbeitungseinrichtung zum Erfassen und Verarbeiten von von der mindestens einen Waage daran weitergeleiteten Verkaufsdaten.

8. Verkaufssystem nach Anspruch 7, **dadurch gekennzeichnet, daß** die Speichereinrichtung und/oder die Aktualisierungseinrichtung in der zentralen Datenverarbeitungseinrichtung vorgesehen ist.

9. Verkaufssystem nach Anspruch 7 oder 8, **dadurch gekennzeichnet, daß** der Speichereinrichtung eine Eingabeeinrichtung zum Eingeben der Mengeninformation zugeordnet ist.

10. Verkaufssystem nach einem der Ansprüche 7 bis 9, **dadurch gekennzeichnet, daß** die zentrale Datenverarbeitungseinrichtung in Form einer Waage nach einem der Ansprüche 1 bis 6 verwirklicht ist.

11. Verfahren zur Sichtdarstellung von warenbezogenen Informationsinhalten während eines Verkaufsvorganges, bei dem mit einer Waage auf Grundlage von das Gewicht von Waren darstellende Signale aufweisenden warenbezogenen Signalen und die Art der zu verkaufenden Waren darstellenden Identifrkationssignale erzeugte Informationsinhalte auf einer Anzeigeeinrichtung der Waage dargestellt werden, wobei mit der Waage eine Sichtdarstellung von die vorhandene Menge der Waren der von den Identifikationssignalen angegebenen Art darstellende Mengeninformationen erzeugt wird.

12. Verfahren nach Anspruch 11, **dadurch gekennzeichnet, daß** die warenbezogenen Signale und/oder die Identifikationssignale an eine zentrale Datenverarbeitungseinrichtung weitergeleitet werden und den darzustellenden Informationsinhalten entsprechende Daten in der zentralen Datenverarbeitungseinrichtung erzeugt und zur Sichtdarstellung der Informationsinhalte oder. Mengeninformation an die Waage übermittelt werden.

## Claims

1. Weighing scales to be used for the sale of goods in a store, with a device, comprising at least one load cell for generating signals representing the weight of the goods, for generating goods-related signals containing signals representing the weight and a device for generating identification signals representing the type of goods to be sold, and a display device for generating a visual representation of information contents that are determined on the basis of the goods-related signals and/or the identification signals, **characterised in that** the scales are operable to generate a visual representation of the available quantity of the goods from representative quantity information of goods of the type indicated by the identification signals.

2. Weighing scales according to Claim 1, **characterised in that** the quantity information is displayed by the display device.

3. Weighing scales according to Claim 1 or 2, **characterised in that** a memory device for storing the quantity data representing the present quantity of goods is assigned to the weighing scales.

4. Weighing scales according to Claim 3, **characterised in that** an updating device for updating the quantity data during and/or after the sales transaction is assigned to the memory device.

5. Weighing scales according to one of the preceding claims, **characterised by** a device for the giving of data particularising the type of goods, on the basis of which the identification signals are generated.

6. Weighing scales according to one of the preceding claims, **characterised in that** the device for generating goods-related signals is designed to generate signals representing the purchase price of the goods.

7. Sales system having weighing scales according to one of the preceding claims and a central data processing unit for capturing and processing sales data forwarded to it by the at least one set of weighing scales.

8. Sales system according to Claim 7, **characterised in that** the memory device and/or the updating device is provided in the central data processing unit.

9. Sales system according to Claim 7 or 8, **characterised in that** an input device for inputting the quantity information is assigned to the memory device.

10. Sales system according to one of Claims 7 to 9, **characterised in that** the central data processing unit is realised in the form of weighing scales according to one of Claims 1 to 6.

11. Process for the visual representation of goods-related information contents during a sales transaction, in which information contents, generated by weighing scales on the basis of goods-related signals containing signals representing the weight of goods and identification signals representing the type of goods to be sold, are represented on a display device of the weighing scales, **characterised in that** with the weighing scales a visual representation of the available quantity of the goods is generated from representative quantity information of goods of the type indicated by the identification signals.

12. Process according to Claim 11, **characterised in that** the goods-related signals and/or the identification signals are forwarded to a central data processing unit and corresponding data which are to represent the information contents are generated in the central data processing unit and are sent to the weighing scales for the visual representation of the information contents or quantity information, respectively.

## Revendications

1. Balance destinée à être utilisée lors de la vente de marchandises dans un magasin, avec un dispositif comportant au moins une cellule de pesée destinée à la génération de signaux représentant le poids des marchandises pour la génération de signaux relatifs aux marchandises comportant les signaux représentant le poids, un dispositif pour la génération de signaux d'identification représentant la nature des marchandises à vendre, et un dispositif d'affichage destiné à engendrer une représentation visuelle de contenus d'informations déterminés sur la base des signaux relatifs aux marchandises et/ou des signaux d'identification, où ladite balance peut fonctionner pour générer une représentation visuelle d'informations quantitatives représentant la quantité présente de marchandises de la nature indiquée par les signaux d'identification.

2. Balance selon la revendication 1, **caractérisée en ce que** les informations quantitatives sont affichées par le dispositif d'affichage.

3. Balance selon la revendication 1 ou 2, **caractérisée en ce qu'**un dispositif de mémorisation est associé à la balance pour la mémorisation des données quantitatives représentant les quantités présentes de marchandises.

4. Balance selon la revendication 3, **caractérisée en ce qu'**un dispositif d'actualisation est associé au dispositif de mémorisation pour l'actualisation des données quantitatives pendant et/ou après le processus de vente.

5. Balance selon l'une quelconque des revendications précédentes, **caractérisée par** un dispositif destiné à l'indication des données indiquant la nature des marchandises, sur la base desquelles sont générés les signaux d'identification.

6. Balance selon l'une quelconque des revendications précédentes, **caractérisée en ce que** le dispositif destiné à générer des signaux relatifs aux marchandises est conçu pour générer des signaux représentant le prix de vente des marchandises.

7. Système de vente avec une balance selon l'une quelconque des revendications précédentes, et un dispositif central de traitement de données pour la saisie et le traitement de données de vente qui lui sont transmises par au moins une balance.

8. Système de vente selon la revendication 7, **caractérisé en ce que** le dispositif de mémorisation et/ou le dispositif d'actualisation sont prévus dans le dispositif central de traitement de données.

9. Système de vente selon la revendication 7 ou 8, **caractérisé en ce qu'**un dispositif d'entrée pour l'entrée des informations quantitatives est associé au dispositif de mémorisation.

10. Système de vente selon l'une quelconque des revendications 7 à 9, **caractérisé en ce que** le dispositif central de traitement de données est réalisé sous la forme d'une balance selon l'une quelconque des revendications 1 à 6.

11. Procédé destiné à la représentation visuelle de contenus d'informations relatifs à des marchandises pendant un processus de vente, dans lequel des contenus d'informations engendrés avec une balance sur la base de signaux représentant le poids de marchandises, et de signaux d'identification représentant la nature des marchandises à vendre, sont représentés sur un dispositif d'affichage de la balance, dans lequel une représentation visuelle des informations quantitatives représentant la quantité présente des marchandises de la nature indiquée par les signaux d'identification est engendrée par la balance.

12. Procédé selon la revendication 11, **caractérisé en ce que** les signaux relatifs aux marchandises et/ou les signaux d'identification sont transmis à un dispositif central de traitement de données, et **en ce que** les données correspondant aux contenus d'informations à représenter sont engendrées dans le dispositif central de traitement de données, et sont transmises à la balance pour la représentation visuelle des contenus d'informations ou des informations quantitatives.
